# EUROPEAN PATENT SPECIFICATION

(11) **EP 3 130 831 B1**
(45) Date of publication and mention of the grant of the patent: **17.04.2019**
(21) Application number: 15799327.0
(22) Date of filing: 24.04.2015
(51) Int. Cl.: F16L 33/22, F16L 37/091

(54) **PIPE JOINT**
ROHRVERBINDUNG
RACCORD DE TUYAUX

(30) Priority: 26.05.2014 JP 2014108018
(43) Date of publication of application: 15.02.2017
(73) Proprietor: Bridgestone Corporation, Tokyo 104-8340 (JP)
(72) Inventor: SAKURADA, Akiyoshi, Tokyo 104-8340 (JP); KASHIWAMATA, Tomoaki, Tokyo 104-8340 (JP); ISHII, Yutaka, Kazo-shi Saitama 347-0017 (JP)
(74) Representative: Oxley, Robin John George
(86) International application number: PCT/JP2015/062554
(87) International publication number: WO 2015/182312

(56) References cited:
- EP-A1- 2 677 224
- DE-U1-202011 000 061
- JP-A- 2005 188 705
- JP-A- 2008 286 260
- JP-A- 2011 127 647
- JP-A- 2012 017 807
- JP-A- 2012 225 384

## Description

### Technical Field

The present invention relates to a pipe joint.

### Background Art

Japanese Patent Application Laid-Open (JP-A) No. 2012-225384 describes a pipe joint for connecting an end portion of a pipe to other piping or the like. The pipe joint includes a joint base with an internal flow path, and a transparent collar is attached to the joint base. A protrusion to prevent removal is provided to the joint base, and removal of the collar from the joint base is suppressed due to a step portion of the collar engaging with the protrusion. Attention is also drawn to the disclosures of EP 2677224 A1 and DE 202011000061 U1.

### SUMMARY OF INVENTION

### Technical Problem

However, the collar described in JP-ANo. 2012-225384 has a structure that is press fitted into the joint base while riding over the removal prevention protrusion that is provided to the joint base. Thus, it is conceivable that when the collar rides over the removal prevention protrusion, the step portion that engages with the protrusion bends and deforms, and cracks arise in the portion that was bent and deformed.

In consideration to the above circumstances, an object of the present invention is to obtain a pipe joint capable of suppressing generation of cracks in a collar that is fixed to a joint base.

### Solution to Problem

The pipe joint of a first aspect relating to the present invention comprising: a joint base including: a base tube section, a removal prevention protrusion that projects out from an outer circumferential face of the base tube section toward a radial direction outer side, and an inner tube that extends out from an end face of the base tube section and that has a smaller diameter than a diameter of the base tube section; and a collar including: a first tube portion that fits over the base tube section, a second tube portion that extends out from the first tube portion along an axial direction, and that has a larger inner diameter than an inner diameter of the first tube portion, an annular shaped space for inserting a pipe into being formed between the second tube portion and the inner tube, and a step portion with which the removal prevention protrusion engages being formed between the second tube portion and the first tube portion, and a sloped face that is formed at the step portion.

According to the pipe joint of the first aspect relating to the present invention, the collar is fixed to the joint base by moving the collar toward one axial direction side, fitting the first tube portion of the collar over the base tube section, and causing the step portion of the collar to engage with the removal prevention protrusion. When this is performed, since according to the present pipe joint, an inner circumferential face of the first tube portion and an inner circumferential face of the second tube portion are joined by the sloped face, the sloped face of the step portion is not liable to catch on the removal prevention protrusion when the step portion rides over the removal prevention protrusion. Accordingly, a bent portion is not liable to form on the sloped face of the step portion, and so generation of cracks originating from the bent portion can be suppressed in the resin collar.

A location at a second tube portion side of the sloped face has a smaller diameter than the inner diameter of the second tube portion and is configured with a concave shaped portion open to a joint base side in a radial direction view.

According to the pipe joint of the first aspect relating to the present invention, due to the location at the second tube portion side of the sloped face being formed as described above, the location at the second tube portion side of the sloped face can be even further suppressed from catching on the removal prevention protrusion. Moreover, due to being configured by the concave shaped portion, even supposing the location at the second tube portion side of the sloped face were to catch on the removal prevention protrusion, the degree of bending could still be reduced.

The pipe joint of a second aspect of the first aspect relating to the present invention, wherein the sloped face is formed with a curved or a tapered shape in a radial direction view.

According to the pipe joint of the second aspect relating to the present invention, due to the sloped face being formed as described above, the sloped face of the step portion can be even further suppressed from catching on the removal prevention protrusion when the step portion rides over the removal prevention protrusion.

The pipe joint of a third aspect of the first aspect or the second aspect relating to the present invention, wherein a location at a first tube portion side of the sloped face has a larger diameter than the inner diameter of the first tube portion and is configured with a convex shaped portion with a convex shape toward a joint base side in a radial direction view.

According to the pipe joint of a third aspect relating to the present invention, due to the location at the one axial direction side of the sloped face being formed as described above, the protrusion shaped portion is even less liable to deform when the step portion rides over the removal prevention protrusion.

### Advantageous Effects of Invention

The pipe joint according to the present invention has the excellent advantageous effect of being able to suppress locations of high stress from arising in a collar fixed to a joint base.

### BRIEF DESCRIPTION OF DRAWINGS

Fig. 1 is a partial side cross-section illustrating a pipe joint.
Fig. 2 is an exploded partial side cross-section illustrating a pipe joint.
Fig. 3 is an enlarged side cross-section illustrating a pipe joint.
Fig. 4 is an enlarged cross-section in which a location enclosed by the single dotted dashed line in Fig. 3 has been enlarged.

### DESCRIPTION OF EMBODIMENTS

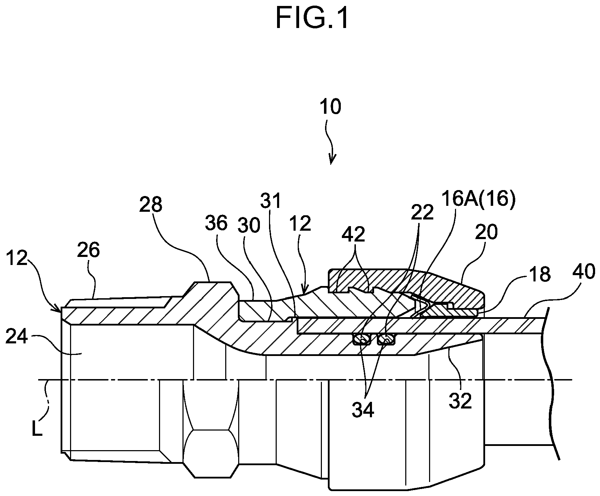

Explanation follows regarding a pipe joint according to an exemplary embodiment of the present invention, with reference to Fig. 1 to Fig. 4.

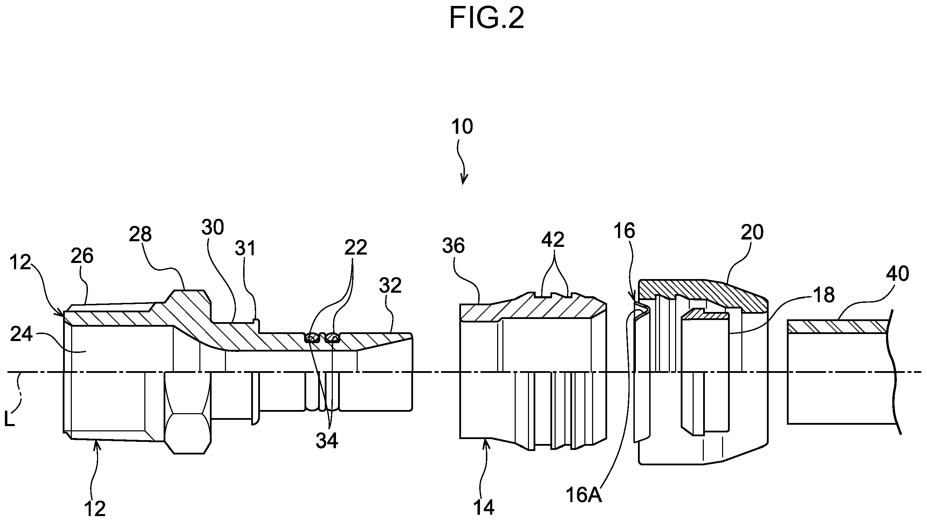

As illustrated in Fig. 1 and Fig. 2, a pipe joint 10 is configured including a joint base 12, a resin collar 14 serving as a collar, a pipe retaining member 16, an opening ring 18, a cap 20, and two O rings 22.

The joint base 12 is formed in a tube shape by employing a material that is harder than the resin collar 14, for example, a metal material such as a gunmetal or bronze copper alloy, or a reinforced resin reinforced with glass fiber or the like. The inside of the joint base 12 is configured by a flow path 24 through which water or hot water for a water supply or hot water supply passes. A male screw portion 26 for installation to another joint member is formed at an end portion on one axial direction side of the joint base 12. Note that configuration may be made in which a female screw portion for installation to another joint member is formed on the one axial direction side end portion of the joint base 12. Moreover, a hexagonal portion 28, having an outer peripheral edge formed in a hexagonal shape as viewed along its axial direction, projects out from an outer periphery of the male screw portion 26. A tube shaped base tube section 30, onto which the resin collar 14, described later, is press fitted, extends from an end face on another axial direction side of the hexagonal portion 28 toward the other axial direction side. An end portion on the other axial direction side of the base tube section 30 is provided with a removal prevention protrusion 31 that projects out from an outer circumferential face of the base tube section 30 toward a radial direction outer side. The removal prevention protrusion 31 functions to prevent the press fitted resin collar 14 from coming out from the other axial direction side end portion of the base tube section 30. Moreover, a tube shaped inner tube 32 having a smaller diameter than the base tube section 30 projects out from the other axial direction side end portion of the base tube section 30 toward the other axial direction side. Two grooves 34 spaced from each other in the axial direction are formed in the outer circumferential face of the inner tube 32, and the sealing O rings 22 are respectively fitted into the two grooves 34.

The resin collar 14 is formed in a tube shape by employing a transparent resin material, such as transparent resin materials of a polyamide or a polycarbonate. An end portion on the one axial direction side of the resin collar 14 is configured by a press fit portion 36 for press fitting onto the base tube section 30 of the joint base 12.

The pipe retaining member 16 is disposed on the other axial direction side of the resin collar 14. The pipe retaining member 16 is formed in a ring shape to surround a pipe 40. The pipe retaining member 16 is formed with an L shaped cross-section and a radial direction inside end portion of the pipe retaining member 16 is configured by a claw portion 16A. When the pipe 40 attempts to move toward a pull out direction, the pipe 40 is suppressed from being removed from the pipe joint 10 due to the claw portion 16A catching on an outer surface of the pipe 40.

The opening ring 18 is disposed on the other axial direction side of the pipe retaining member 16, and the opening ring 18 is capable of moving along the pipe 40 in the axial direction. By moving the opening ring 18 toward the one axial direction side, the opening ring 18 enters between the claw portion 16A of the pipe retaining member 16 and the outer surface of the pipe 40 and separates the outer surface of the pipe 40 and the claw portion 16A from each other. The pipe 40 can thereby be removed from the pipe joint 10.

The cap 20 employs a polyacetal resin or the like and is formed in a tube shape. The cap 20 engages with an engaged recess portion 42, described later, of the resin collar 14, thereby preventing the opening ring 18 from coming out to the other axial direction side. Relative movement of the resin collar 14, the pipe retaining member 16, and the opening ring 18 in the axial direction is accordingly restricted.

Next, detailed explanation follows regarding configuration of the resin collar 14, this being a relevant section of the present exemplary embodiment.

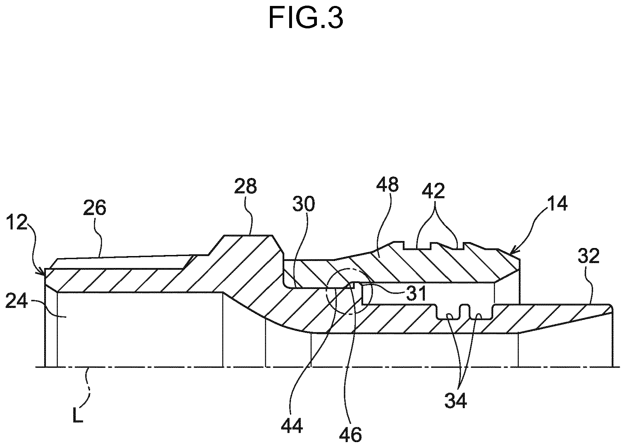

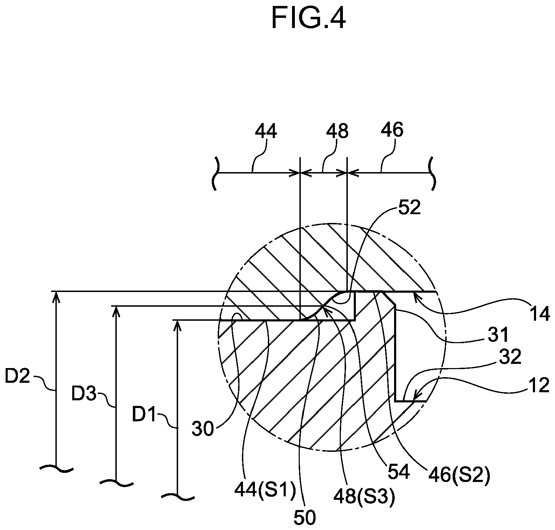

As illustrated in Fig. 3 and Fig. 4, the resin collar 14 includes three locations having different inner diameters: a first tube portion 44, a second tube portion 46, and a step portion 48.

A location on the one axial direction side of the resin collar 14 is configured by the first tube portion 44. In a state in which the resin collar 14 is fixed to the joint base 12, the first tube portion 44 is disposed at (fitted over) an outer circumferential side of the base tube section 30. An inner diameter of the first tube portion 44 is D1.

A location on the other axial direction side of the resin collar 14 is configured by the second tube portion 46. In a state in which the resin collar 14 is fixed to the joint base 12, the second tube portion 46 is disposed at the outer circumferential side of the removal prevention protrusion 31 and at the outer circumferential side of the inner tube 32 of the joint base 12. Moreover, an inner diameter D2 of the second tube portion 46 is an inner diameter that is larger than the inner diameter D1 of the first tube portion 44. The resin collar 14 is fixed to the joint base 12 such that an annular shaped space is formed between the second tube portion 46 and the inner tube 32 of the joint base 12, for inserting the pipe 40 into. The engaged recess portion 42, with which the cap 20 engages, is formed at a location on the other axial direction side of the second tube portion 46.

A location of the resin collar 14 between the first tube portion 44 and the second tube portion 46 is configured by the step portion 48. An inner circumferential face of the step portion 48 is configured by a sloped face S3. The sloped face S3 joins an inner circumferential face S1 of the first tube portion 44 and an inner circumferential face S2 of the second tube portion 46 and is sloped with respect to a center line L of the pipe joint 10. An inner diameter of the sloped face S3 gradually narrows on progression toward the one axial direction side. More specifically, an inner diameter D3 of the sloped face S3 gradually decreases in diameter on progression toward the one axial direction side, over a range from an inner diameter exceeding the inner diameter D1 of the first tube portion 44 to an inner diameter less than the inner diameter D2 of the second tube portion 46. Note that one inner diameter of the sloped face S3 is depicted in Fig. 4.

Moreover, a location of the sloped face S3 on the first tube portion 44 side is configured by a convex shaped portion 50 with a convex shape toward the joint base 12 side in side cross-section view (a radial direction view). A location of the sloped face S3 on the second tube portion 46 side is configured by a concave shaped portion 52 open to the joint base 12 side in side cross-section view. An axial direction intermediate portion of the sloped face S3 is configured by a tapered portion 54 joining the convex shaped portion 50 and the concave shaped portion 52 together. In the present exemplary embodiment, an angle formed between the tapered portion 54 and the center line L of the pipe joint 10 is set so as to be within a range of from 30 degrees to 60 degrees. In the present exemplary embodiment, the radius of the convex shaped portion 50 and the concave shaped portion 52 in side cross-section view is set to 0.2 mm.

Next, explanation follows regarding operation and advantageous effects of the present exemplary embodiment.

As illustrated in Fig. 3 and Fig. 4, in the pipe joint 10 of the present exemplary embodiment, the resin collar 14 is fixed to the joint base 12 by moving the resin collar 14 toward the one axial direction side, fitting the first tube portion 44 of the resin collar 14 over the base tube section 30, and causing step portion 48 of the resin collar 14 to engage with the removal prevention protrusion 31.

Note that in the present exemplary embodiment, the inner diameter D3 of the sloped face S3 of the step portion 48 is set as described above. Thus, when the step portion 48 rides over the removal prevention protrusion 31, the convex shaped portion 50 formed on the sloped face S3 of the step portion 48 is not liable to deform. Accordingly, a bent portion is not liable to be formed at the concave shaped portion 52 formed on the sloped face S3 of the step portion 48 and generation of cracks can thereby be suppressed in the resin collar 14 fixed to the joint base 12.

Moreover, in the present exemplary embodiment, the locations at the first tube portion 44 side and on the second tube portion 46 side of the sloped face S3 are respectively configured by the convex shaped portion 50 and the concave shaped portion 52 described above. Accordingly, when the step portion 48 rides over the removal prevention protrusion 31, the sloped face S3 of the step portion 48 can be even further suppressed from catching on the removal prevention protrusion 31.

Explanation has been given above regarding an exemplary embodiment of the present invention; however, the present invention is not limited to the above, and obviously various other modifications may be implemented within a range defined by the appended claims.

## Claims

1. A pipe joint (10) comprising:
a joint base (12) including:
a base tube section (30),
a removal prevention protrusion (31) that projects out from an outer circumferential face of the base tube section (30) toward a radial direction outer side, and
an inner tube (32) that extends out from an end face of the base tube section (30) and that has a smaller diameter than a diameter of the base tube section (30); and
a collar (14) including
a first tube portion (44) that fits over the base tube section (30),
a second tube portion (46) that extends out from the first tube portion (44) along an axial direction, and that has a larger inner diameter than an inner diameter of the first tube portion (44), an annular shaped space for inserting a pipe (40) into being formed between the second tube portion (16) and the inner tube (32), and a step portion (48) with which the removal prevention protrusion (31) engages being formed between the second tube portion (46) and the first tube portion (44), and
a sloped face that is formed at the step portion (48),
and wherein a location at a second tube portion (46) side of the sloped face (S3) has a smaller diameter than the inner diameter of the second tube portion (46) **characterized in that** the sloped face is configured with a concave shaped portion (52) open to a joint base (12) side in a radial direction view.

2. The pipe joint (10) of claim 1, wherein the sloped face (S3) is formed with a curved or a tapered shape in a radial direction view.

3. The pipe joint (10) of claim 1 or claim 2, wherein a location at a first tube portion (44) side of the sloped face (S3) has a larger diameter than the inner diameter of the first tube portion (44) and is configured with a convex shaped portion (50) with a convex shape toward a joint base (12) side in a radial direction view.

## Patentansprüche

1. Rohrverbindungsstück (10) umfassend:
eine Verbindungsstückbasis (12), die Folgendes einschließt:
einen Basisrohrabschnitt (30),
einen Entfernungsverhinderungsvorsprung (31), der von einer Außenumfangsfläche des Basisrohrabschnitts (30) in Richtung einer Außenseite in radialer Richtung vorsteht, und
ein Innenrohr (32), das sich von einer Endfläche des Basisrohrabschnitts (30) aus erstreckt und einen kleineren Durchmesser als ein Durchmesser des Basisrohrabschnitts (30) hat; und
einen Kragen (14), der Folgendes einschließt:
einen ersten Rohrabschnitt (44), der über den Basisrohrabschnitt (30) passt,
einen zweiten Rohrabschnitt (46), der sich von dem ersten Rohrabschnitt (44) entlang einer axialen Richtung aus erstreckt und einen größeren Innendurchmesser als ein Innendurchmesser des ersten Rohrabschnitts (44) hat, wobei ein ringförmiger Raum zum Einsetzen eines Rohres (40) zwischen dem zweiten Rohrabschnitt (16) und dem Innenrohr (32) gebildet wird und wobei zwischen dem zweiten Rohrabschnitt (46) und dem ersten Rohrabschnitt (44) ein Stufenabschnitt (48), mit dem der Entfernungsverhinderungsvorsprung (31) in Eingriff gelangt, gebildet wird, und
eine geneigte Fläche, die an dem Stufenabschnitt (48) ausgebildet ist, und wobei eine Stelle an einer Seite des zweiten Rohrabschnitts (46) der geneigten Fläche (S3) einen kleineren Durchmesser als der Innendurchmesser des zweiten Rohrabschnitts (46) hat, **dadurch gekennzeichnet, dass** die geneigte Fläche mit einem konkav geformten Abschnitt (52) konfiguriert ist, der, in radialer Richtung betrachtet, zu einer Seite der Verbindungsstückbasis (12) offen ist.

2. Rohrverbindungsstück (10) nach Anspruch 1, wobei die geneigte Fläche (S3), in radialer Richtung betrachtet, mit einer gekrümmten oder sich verjüngenden Form ausgebildet ist.

3. Rohrverbindungsstück (10) nach Anspruch 1 oder Anspruch 2, wobei eine Stelle an einer Seite des ersten Rohrabschnitts (44) der geneigten Fläche (S3) einen größeren Durchmesser als der Innendurchmesser des ersten Rohrabschnitts (44) hat und mit einem konvex geformten Abschnitt (50) konfiguriert ist, der, in radialer Richtung betrachtet, eine konvexe Form in Richtung einer Seite der Verbindungsbasis (12) aufweist.

## Revendications

1. Raccord de tuyau (10) comprenant:
une base d'articulation (12) comprenant:
une section de tube de base (30),
une saillie d'empêchement de retrait (31) qui fait saillie hors d'une face circonférentielle extérieure de la section de tube de base (30) vers un côté extérieur dans la direction radiale, et
un tube interne (32) qui s'étend à partir d'une face d'extrémité de la section de tube de base (30) et qui a un diamètre inférieur à celui de la section de tube de base (30); et
un collier (14) comprenant
une première partie de tube (44) qui s'adapte sur la section de tube de base (30),
une seconde partie de tube (46) qui s'étend à partir de la première partie de tube (44) le long d'une direction axiale et qui a un diamètre interne supérieur au diamètre interne de la première partie de tube (44), un espace annulaire pour insérer un élément un tuyau (40) étant formé entre la seconde partie de tube (16) et le tube interne (32), et une partie en gradin (48) avec laquelle la saillie d'empêchement de retrait (31) s'engage étant formée entre la seconde partie de tube (46) et la première partie de tube (44), et
une face inclinée qui est formée au niveau de la partie en gradin (48), et dans laquelle un emplacement sur un côté de la seconde partie de tube (46) de la face inclinée (S3) a un diamètre inférieur au diamètre interne de la seconde partie de tube (46) **caractérisé en ce que** la face inclinée est configuré avec une partie de forme concave (52) s'ouvrant sur un côté de base d'articulation (12) dans une vue en direction radiale.

2. Raccord de tuyau (10) selon la revendication 1, dans lequel la face inclinée (S3) est formée avec une forme incurvée ou effilée dans une vue dans la direction radiale.

3. Raccord de tuyau (10) selon la revendication 1 ou la revendication 2, dans lequel un emplacement sur un côté de la première partie de tube (44) de la face inclinée (S3) a un diamètre plus grand que le diamètre interne de la première partie de tube (44) et est configuré avec une partie de forme convexe (50) ayant une forme convexe vers un côté de la base d'articulation (12) dans une vue dans la direction radiale.
